# EUROPEAN PATENT APPLICATION

(11) **EP 4 163 868 A1**
(43) Date of publication of application: **12.04.2023**
(21) Application number: 21200938.5
(22) Date of filing: 05.10.2021
(51) Int. Cl.: G06T 7/00

(54) **METHOD AND MACHINE-LEARNING CLASSIFIER FOR DETECTING ANOMALIES IN MEDICAL IMAGES OF BILATERALLY SYMMETRIC ORGANS**

(71) Applicant: Emam, Sherief, 98693 Ilmenau (DE)
(72) Inventor: EMAM, Sherief, 98693 Ilmenau (DE); ELAMIR, Mohamed, 74354 Besigheim (DE); KALIL, Mohamed, 98693 Ilmenau (DE); ABDELSALAM, Ahmed, 82319 Starnberg (DE); AYAD, Ahmed, 46539 Dinslaken (DE)
(74) Representative: Liedtke & Partner Patentanwälte

(57) **Abstract**

The invention relates to a method for detecting at least one medical anomaly, wherein a first raw image (10L) is acquired from a first organ of a human or animal body and a second raw image (10R) is acquired from a second organ of the same human or animal body substantially simultaneously to the first raw image (10L), wherein the first and second organ are bilaterally-symmetric relative to each other. For at least one feature characterising a medical anomaly, a feature image (12L to 15L, 12R to 15R) comprising the feature is derived from each of the raw images (10L, 10R). For each feature, the feature image (12L to 15L) derived from the first raw image (10L) and the corresponding feature image (12R to 15R) derived from the second raw image (10R) are aligned according to the symmetry of the bilaterally-symmetrical first and second organ and paired into a feature image pair (12P to 15P). At least one feature image pair (12P to 15P) is presented to an artificial neural network (ANN) (30) being trained to detect and/or classify a medical anomaly from the at least one feature image pair (12P to 15P). The invention further relates to a method for training an ANN (30) and an aggregation ANN (31) and to an ANN (30) and aggregation ANN (31) trained by such a method.

## Description

### Technical Field

The invention relates to a method for detecting anomalies in medical images by means of a machine-learning classifier. The invention further relates to such machine-learning classifier and to a method for its training.

### Background of the Invention

Medical imaging such as X-rays is one of the fundamental methods with which Radiologists can detect if a patient has cancerous lesions. Early detection is key in being able to treat such diseases successfully with minimal impact on the patient. For this reason, there are major governmental efforts and social movements to run scans systematically on the general population to be able to detect such illnesses in the early treatable stages.

An example of such movements is the screening program for breast X-ray scans for the purpose of detecting breast cancer in women in early stages. Such programs generate an increasingly large number of scans that surpasses the capacity of existing radiologists to analyse the generated medical images fully and thoroughly.

Humans and mammals in general have various organs that are, under normal conditions, bilaterally-symmetric by their anatomical structure, such as limbs, kidneys or mammas (i.e. female breasts). When anomalies are to be detected in such substantially pairwise-symmetric organs, the evaluation of asymmetries between a pair of organs of the same individual is of interest.

In mammography, for example, an asymmetry, i.e. a deviation from the pairwise symmetry, is an area of increased density in one breast when compared to the corresponding area in the opposite breast. Radiologists usually analyse images of both breasts simultaneously to verify anomalies based on the existing symmetry. Evaluating breast asymmetry is related to early detection of breast cancer and it may reduce both the false positive as well as the false negative rates. Asymmetry analysis can be performed as a simple bilateral analysis, where differences between the left and right breast are analysed. It can also be performed as a longitudinal analysis, where current and prior mammograms are compared.

Known anomaly detection methods based on asymmetry are either feature-based, rely on simple bilateral subtraction techniques, or depend on a region of interest (ROI) manually provided by a radiologist. Also, methods for the detection of masses in pairs of mammography images adapted to the density of breast tissue using image processing techniques and similarity index techniques from biology and convolutional neural networks have been suggested.

### Summary of the Invention

It is an object of the present invention to provide an improved method for the detection of medical anomalies based on images taken from bilaterally-symmetric organs.

The object is achieved by a method according to claim 1.

Furthermore, it is an object of the present invention to provide a machine-learning classifier for the detection of medical anomalies based on images taken from bilaterally-symmetric organs. This object is achieved by a machine-learning classifier according to claim 10.

It is yet a further object of the present invention to provide a method for training such a machine-learning classifier for the detection of medical anomalies based on images taken from bilaterally-symmetric organs. This object is achieved by a machine-learning classifier according to claim 8.

Preferred embodiments of the invention are given in the dependent claims.

In a method for detecting at least one medical anomaly, a first raw image is acquired from a first organ of a human or animal body and a second raw image is acquired from a second organ of the same human or animal body substantially simultaneously to the first raw image, wherein the first and second organ are bilaterally-symmetric relative to each other.

Here and in the following, "substantially simultaneously" is to be understood as either simultaneously or within a time span, during which a change of a medical condition (such as an appearance or disappearance of a pathology) is impossible or highly unlikely.

A medical anomaly is to be understood as a deviation from a normal condition or appearance of an organ that is indicative albeit not necessarily connected with a medical disorder or a pathological change.

For at least one feature characterising a medical anomaly, a feature image comprising the feature is derived from each of the raw images. Such feature could, for instance, be the circumference of the organ or of a specific region of interest within the organ, the indication of specific structures, e.g. specific types of tissue, the indication of specific anatomical structures, e.g. a papilla of the breast, or the indication of a concentration of specific substances, e.g. bodily fluids.

For each feature, the feature image derived from the first raw image and the corresponding feature image derived from the second raw image are aligned according to the symmetry of the bilaterally-symmetrical first and second organ and paired into a feature image pair. For example, for mirror-symmetrical structured organs like the female breasts, one of the corresponding feature images is flipped horizontally, if the raw images of the breasts are taken along a craniocaudal direction, as it is usually the case.

Then, at least one feature image pair is presented to an artificial neural network (ANN) that was trained to detect and/or classify a medical anomaly from the at least one feature image pair.

By presenting pairs of aligned feature images that, under normal conditions, appear similar or with just minor differences, the detection of anomalies that presumably affect both feature images of one pair differently is made easier for an ANN. Thereby, the accuracy and reliability of such anomaly detection can be improved.

In an embodiment of the method, a plurality of feature image pairs is stacked into a feature image stack and/or transformed into a feature tensor structure designed for feeding into the ANN. Thereby, the performance of the training of and the classification by the ANN is improved. Furthermore, as the more efficient representation of the input data by a feature tensor structure reduces the required amount of training data, the generalisation of the trained ANN is improved. Thereby, the accuracy and reliability of the method is improved as well.

In an embodiment of the method, a plurality of feature image pairs is derived for each feature, whereby the feature image pairs are acquired along subsequent time points. For each of the time points, at least one feature image pair is presented to the ANN, thereby generating at least one output value associated with each of the time points. The output values of the ANN that are associated with the time points are presented to a downstream aggregation artificial neural network (ANN) that was trained to detect and/or classify a medical anomaly from a plurality of output values of the upstream ANN

With this embodiment, a longitudinal analysis is possible that takes into consideration both the side-by-side comparison of substantially simultaneously acquired features from both bilateral-symmetrical organs and the time course of said side-by-side comparison. Thereby, the diagnosis of asymmetries that are subtle can be improved. For example, when diagnosing asymmetries in mammography, such asymmetries appear similar to typical fibroglandular tissue in the breast. By said embodiment, the differentiation between such fibroglandular tissue and asymmetries that constitute an anomaly is improved.

In an embodiment of the method, non-exam patient data that is correlated to at least one medical anomaly is presented to the aggregation ANN, wherein the non-exam patient data refers to a patient from which the first and the second raw image were taken.

"Non-exam patient data" is to be understood as data that refers to a specific patient but that is not related to a specific exam (such a specific image or set of images taken from that patient). Such non-exam patient data may comprise the age and/or the weight and/or the ethnicity and/or prior medical conditions of said patient.

By feeding non-exam patient data into the aggregation ANN (in addition to the longitudinal output data that the upstream ANN generates for the different time points), the findings of the aggregation ANN are put into context. The aggregation ANN is thus enabled to determine that a certain set of features are of high risk and have certain significance for the certain class of patients, while being of no significance for a different class of patients. This contextual differentiation could be based on age for example, where certain anomalies are expected to appear after a certain age and if they appear at a younger age then they could have different significance. Other information about the patient also plays a similar role in putting the image processing and analysis findings into perspective.

Thereby, the accuracy and reliability of the method is improved.

In an embodiment, the ANN and/or the aggregation ANN is formed as a convolutional neural network (CNN) being trained by a deep learning training method. CNNs trained by deep learning are known to implicitly (i.e. without being constructed on rule-based knowledge) extract features that are appropriate for a classification task. Thereby, the efficiency, accuracy and reliability of the method can be improved.

In an embodiment of the method, the first raw image is taken from the left mamma (breast) and the second raw image is taken from the right mamma (breast) of a patient.

As already pointed out, the detection of anomalies in mammography screening is a difficult, error-prone and cumbersome procedure when done manually. The proposed method provides an efficient and particularly accurate means for automated mammography screening that may reduce costs and improve the outcome of the patients.

In a method for training an artificial neural network to detect at least one medical anomaly, for a plurality of first and second raw images, a first raw image is acquired from a first organ of a human or animal body and a second raw image is acquired from a second organ of the same human or animal body substantially simultaneously to the first raw image, wherein the first and second organ are bilaterally-symmetric relative to each other.

For at least one feature characterising a medical anomaly, a feature image comprising the feature is derived from each of the raw images. For each feature, the feature image derived from the first raw image and the corresponding feature image derived from the second raw image are aligned according to the symmetry of the bilaterally-symmetrical first and second organ and paired into a feature image pair.

An artificial neural network (ANN) is trained to detect and/or classify a medical anomaly by presenting the plurality of feature image pairs.

By this method, an ANN can be provided for detecting medical anomalies with an improved accuracy and reliability.

In a method for training an aggregation ANN, for each feature, a plurality of feature image pairs is derived for subsequent time points. For each of the time points, at least one feature image pairs presented to the ANN generating at least one output value associated with each of the time points as explained previously.

An aggregation artificial neural network is trained to detect and/or classify a medical anomaly from a plurality of output values of the ANN and furthermore from non-exam patient data correlated to at least one medical anomaly and referring to a patient from which the raw images were taken.

By this method, an aggregation ANN can be provided for detecting medical anomalies that considers longitudinal data (i.e. anomaly detection results from previously taken raw images) together with additional data that is related to factors that correlate with the appearance of medical anomalies. Thereby, an improved accuracy and reliability in the detection of such anomalies is enabled.

According to the invention, a machine-learning classifier comprises an ANN trained as previously explained. The machine-learning classifier may, in an embodiment, furthermore comprise an aggregation ANN trained as previously explained. The advantages of such machine-learning classifiers correspond to the advantages of the previously explained methods for medical anomaly detection that make use of them, respectively.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given hereinbelow and the accompanying drawings which are given by way of illustration only, and thus, are not limiting the present invention, and wherein:
- Figure 1: shows a flow chart for an anomaly detection method comprising a first through a sixth step,
- Figure 2: schematically shows an image digitisation and preprocessing step (first step),
- Figure 3: schematically shows a feature extraction step (second step),
- Figure 4: schematically shows a bilateral image pairing step (third step),
- Figure 5: schematically shows an image pair stack building step (fourth step),
- Figure 6: schematically shows a first classification step (fifth step) and
- Figure 7: schematically shows a second classification step (sixth step).

Corresponding parts are marked with the same reference symbols in all figures.

### Detailed Description of Preferred Embodiments

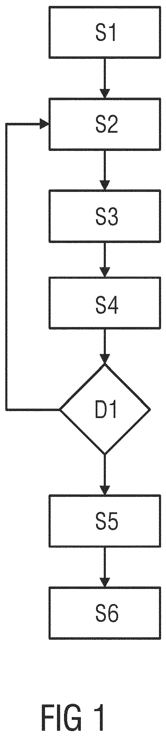

**Figure 1** shows a flow chart for a method for detecting anomalies in medical images taken from different, however substantially identical or symmetrical organs of one individual. By way of example, figure 1 explains a flow chart for analysing raw images 10L, 10R that were bilaterally taken in pairs from each of a woman's breast, i.e. a first raw image 10L taken from the left and a second raw image taken 10R from the right breast, respectively. However, said method can be applied onto images taken from other, bilaterally symmetrically organised organs as limbs or kidneys.

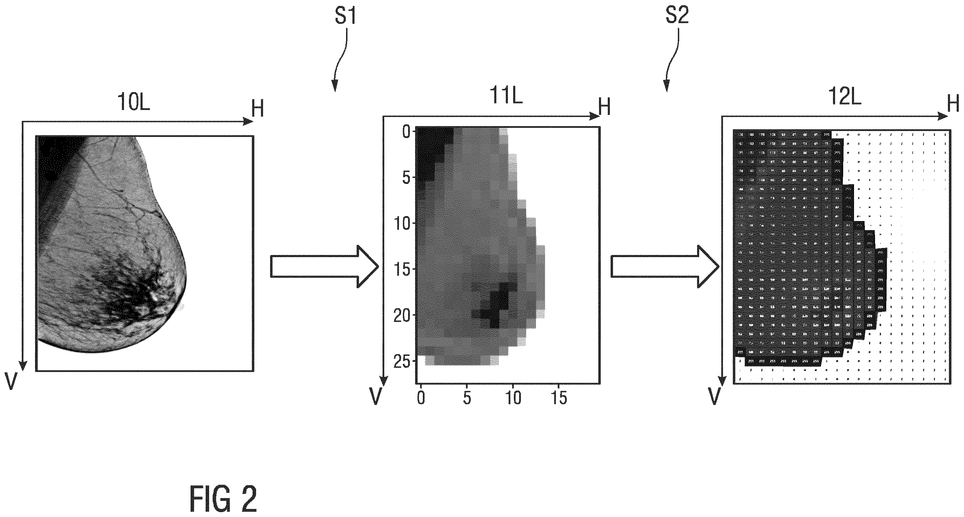

Figure 1 provides an overview on the method. Further details are explained with the description of figures 2 to 7.

The method starts with a first step S1, wherein bilaterally corresponding raw images 10L, 10R, which are not shown in figure 1, are selected. Each raw image 10L, 10R is digitised and preprocessed. The details of the first step S1 are explained later on with the help of figure 2 and its description.

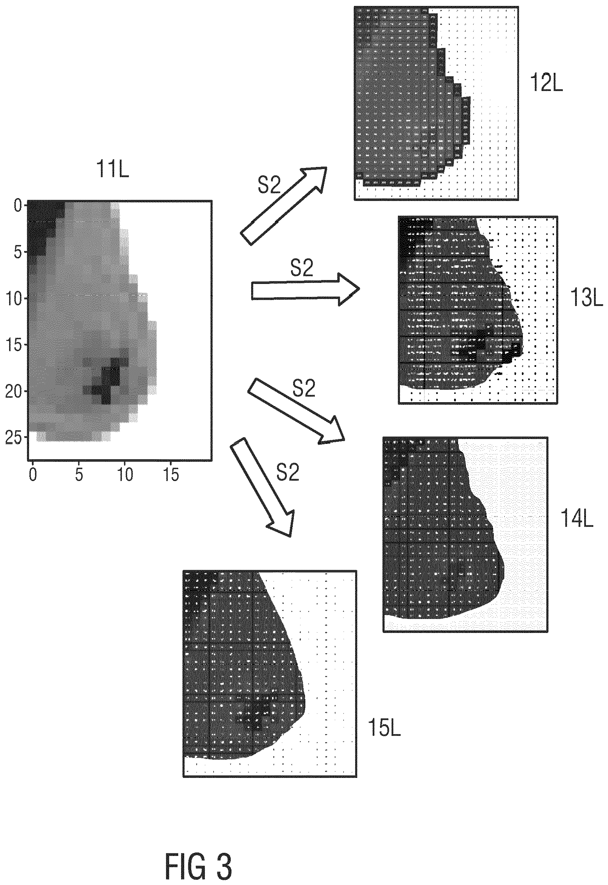

Subsequent to the first step S1, features of interest are extracted by means of filtering and/or mathematical operations in a second step S2. The details of the second step S2 are explained later on with the help of figure 3 and its description.

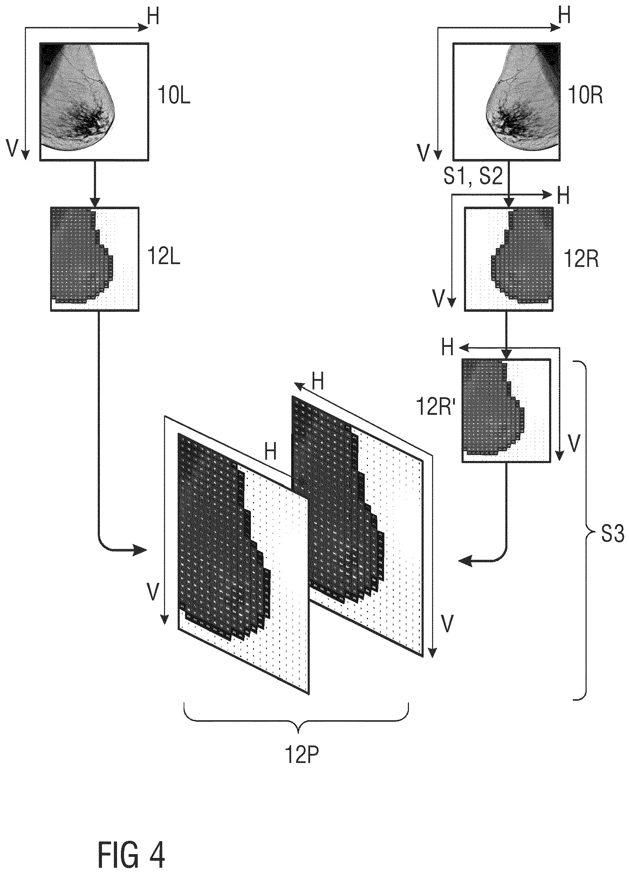

Subsequent to the second step S2, bilaterally corresponding feature images 12L to 15R (not shown in figure 1) comprising extracted features of interest are transformed and grouped into feature image pairs 12P to 15P in a third step S3. The feature images 12L to 15R are transformed into alignment e.g. flipped horizontally and/or vertically such that a first layer comprising the output of the feature extraction operation for the left breast side is followed by a second layer comprising the output of the feature extraction operation for the right breast side. The details of the third step S3 are explained later on with the help of figure 4 and its description.

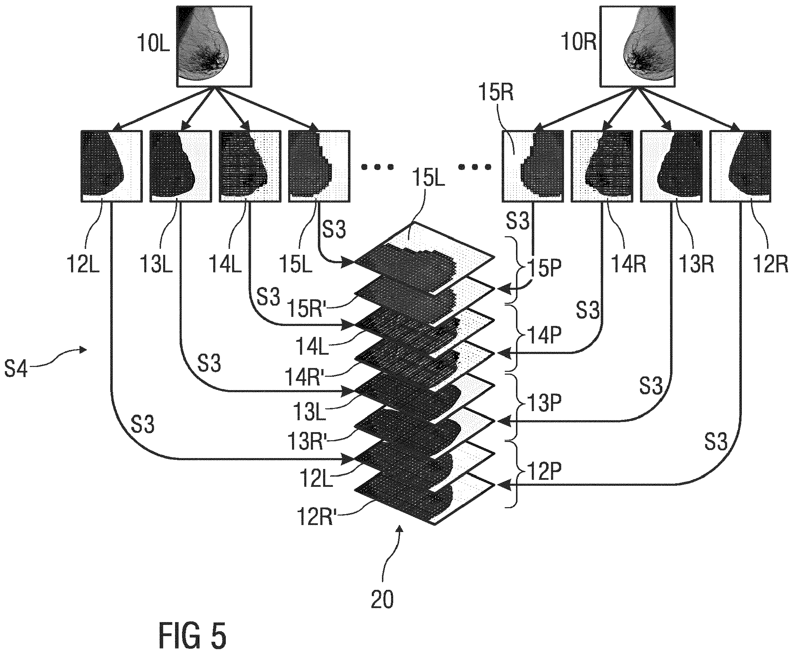

Subsequent to the third step S3, feature image pairs 12P to 15P (not shown in figure 1) comprising extracted features are stacked onto a feature image stack 20 (not shown in figure 1) in a fourth step S4. The details of the fourth step S4 are explained later on with the help of figure 5 and its description.

Subsequent to the fourth step S4, it is tested in a first decision step D1 whether at least one further feature is configured to be extracted. If so, the second, the third and the fourth step S2, S3, S4 are repeated for the at least one further feature. By way of example only,
- as a first feature, the circumference (or wall) of a breast is identified,
- as a second, feature a region comprising a breast papilla is identified,
- as a third feature, a separation between breast tissue and pectoral muscle tissue is identified, and
- as a fourth feature, different types of breast tissue are identified.

In other words: the third and the fourth step S3, S4 are executed four times and four image pairs, each comprising one of the first to fourth feature, are stacked onto the feature image stack 20.

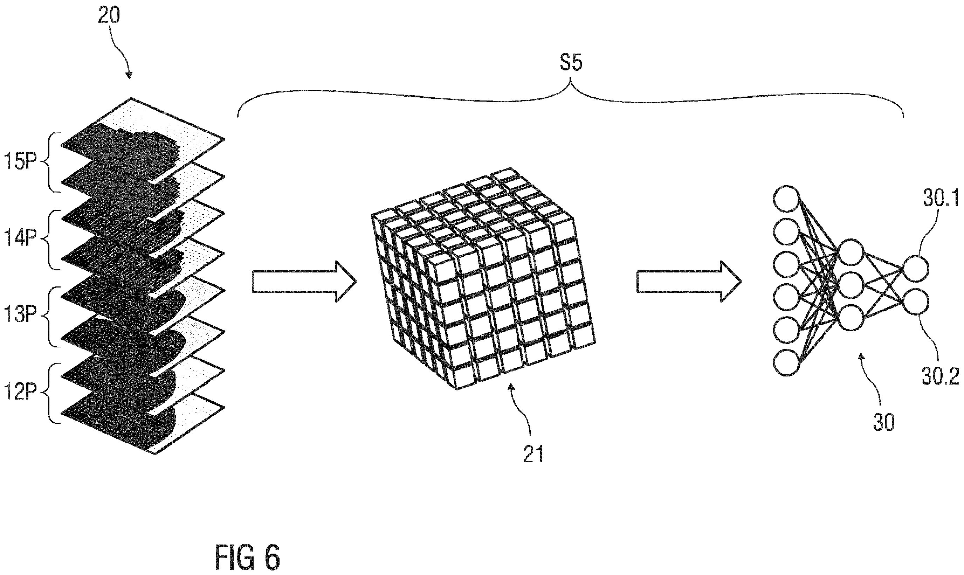

If no further features are configured for extraction, a fifth step S5 is executed wherein the feature image stack 20 is presented to a machine learning classifier. The details of the fifth step S5 are explained later on with the help of figure 6 and its description.

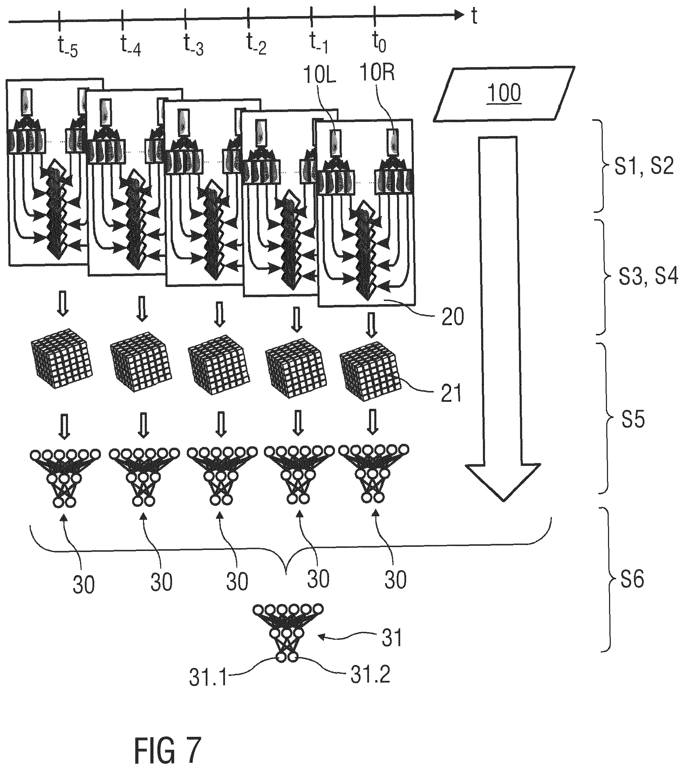

Subsequent to the fifth step S5, a longitudinal study comprising a plurality of feature image stacks 20, each acquired at a different point in time, is presented along with further patient data 100 to a set of machine learning classifiers in a sixth step S6. The details of the sixth step S6 are explained later on with the help of figure 7 and its description.

**Figure 2** schematically shows the preprocessing of a first, left raw image 10L into a left preprocessed image 11L as it is performed in the first step S1. The left raw image 10L extends along a vertical direction V and along a horizontal direction H. As a specific example, the left raw image 10L is shown as an X-ray image of the left breast of a woman.

Medical images are taken with medical image acquisition modalities (imaging devices) in different formats. In the first step S1, the raw image 10L is converted from the format provided by the specific imaging device into a digital presentation that can be processed by a computer. Specifically, a raw image 10L provided by an analogue acquisition modality (such as a classical X-ray film) is sampled into pixels of a digital image 11L, wherein each pixel value is digitised into finite, discrete pixel value.

As an example, pixel values can be chosen over a range of integer values from 0 to 255, such that they can be stored as single byte integer values for further processing. Pixel values can subsequently also be normalised or scaled such that they represent all details in the raw image 10L while being limited to a certain, pre-defined value range in order to maximise the efficiency of the digital image 11L.

Albeit not explicitly shown in figure 1, the first step S1 is performed in the same way on a right raw image 10R that corresponds to the left raw image 10L, i.e. that is taken from the right breast of the same woman at approximately the same time as the left raw image 10L. The application of the first step S1 on the right raw image 10R results in a right digital image 11R.

Further on, along the second step S2, the left digital image 11L is processed by filtering or application of other mathematical operations into a left feature image 12L. **Figure 3** illustrates various embodiments of the second step S2 in more detail.

In a first embodiment of the second step S2, a first left feature image 12L is generated from the left digital image 11L, wherein the circumference of the breast (i.e. the breast wall) is identified.

In a second embodiment of the second step S2, a second left feature image 13L is generated from the left digital image 11L, wherein a region comprising the breast papilla is identified.

In a third embodiment of the second step S2, a third left feature image 14L is generated from the left digital image 11L, wherein a separation between breast tissue and pectorial muscle tissue is identified.

In a fourth embodiment of the second step S2, a fourth left feature image 15L is generated from the left digital image 11L, wherein different types of breast tissue are identified.

At least some of the embodiments of the second step S2 can be implemented on a computer using available image processing toolboxes. The various embodiments of the second step S2, i.e. the types of filters and/or mathematical operations, are pre-configured and applied subsequently on the left digital image 11L as well as on the corresponding right digital image 11R, as was previously explained with figure 2. Thereby, along the second step S2 the right digital image 11R is transformed into a first to fourth left feature image 12R to 15R.

Further on, one of the corresponding images of bilaterally symmetric organs is transformed into alignment to the other one in the third step S3, as explained in more detail in **figure 4**. Under normal (non-pathological) conditions, raw images 10L, 10R taken from the left and the right breast of an individual woman are distinctly mirror-symmetric to each other. Said symmetry results from anatomical structures that are individually different but that are closely related for both breasts of one individual woman. More specifically, when taken along a craniocaudal direction, as it is usually the case, the raw images 10L, 10R show a strong mirror-symmetry along the horizontal direction H. This mirror-symmetry also extends onto the digital images 11L, 11R (not explicitly shown in figure 4) and further on to the feature images 12L to 15L, 12R to 15R.

In the third step S3 for each of the pre-configured features, one feature image 12R is flipped horizontally, whereas the orientation of the corresponding other feature image 12L is maintained. In the embodiment according to figure 4, the right feature image 12R is flipped horizontally into a flipped feature image 12R', whereas the left feature image 12L is maintained in its orientation. However, in other embodiments it is also possible to flip horizontally the left feature image 12L and to maintain the right feature image 12R.

Also, if the raw images 10L, 10R of corresponding organs may, as a result of the positioning of the imaging device relative to the bilaterally symmetric organs, show a different type of symmetry, e.g. a vertical symmetry or a rotational symmetry. In that case, the right feature image 12R would be transformed in such a way that the respective symmetry is compensated (e.g. flipped vertically or rotated) and that the anatomical structures of the accordingly transformed right feature image 12R' are brought into alignment with the anatomical structures of the untransformed (maintained) left feature image 12L.

In the third step S3, both the left feature image 12L and the corresponding, flipped right feature image 12R' are paired into a feature image pair 12P. Under normal, non-pathological conditions, feature images 12L, 12R' within such a feature image pair 12P are closely correlated to each other, i.e. show a close pixel-by-pixel similarity.

On the contrary, a pathological condition such as a tumour tends to develop differently in both bilaterally-symmetric organs, i.e. breasts. Thereby, even in an early stage of such a development, a feature image pair 12P will show much more significant deviations between its feature images 12L, 12R'. The invention bases on the insight that deviations between accordingly transformed feature images 12L, 12R' of such feature image pair 12P, when presented to a machine-learning classifier, enables a more reliable and more sensitive detection of pathological conditions in comparison to the processing of feature images 12L to 15R of one individual organ (i.e. breast) alone.

More specifically, the invention bases on the insight that transforming (e.g. flipping or rotating) feature images 12L, 12R of corresponding bilaterally-symmetric organs into alignment and presenting them as feature image pairs 12P eases the recognition and/or detection of anomalies (i.e. pathological conditions) by a machine-learning classifier.

Figure 4 gives just one example for generating feature image pairs 12P for the first feature. As illustrated by **figure 5**, feature image pairs 13P to 15P are generated in the same way for the second to fourth feature. In the fourth step S4, all generated feature image pairs 12P to 15P are stacked together into a feature image stack 20. In other words: the feature image stack 20 extends the idea of a single feature image pair 12P as it comprises not just one but all pre-configured features extracted from the raw images 10L, 10R of both corresponding, bilaterally-symmetrical organs (i.e. breasts) in a pixel-by-pixel aligned representation, that is particularly well suited for a machine-learning classifier. In total, the feature image stack 20 thus comprises f feature images 12L to 15L that were not transformed and further f feature images 12R' to 15R' that were transformed (i.e. horizontally flipped), wherein f denotes the number of pre-configured features that are to be extracted from the raw images 10L, 10R.

**Figure 6** schematically illustrates the further processing of the feature image stack 20 in the fifth step S5. At first, the feature image stack 20 with the aligned feature images 12L to 15R' is transformed into a feature tensor structure 21. The feature tensor structure 21 is formed as a multi-dimensional matrix and comprises the topological structure and the individual information of the feature image stack 20. It is structured in such a way that it is suitable for feeding a machine-learning classifier.

By way of example, the feature tensor structure 21 is fed into a trained artificial neural network (ANN) 30. The ANN 30 is trained by a supervised training algorithm. In such a supervised training, feature tensor structures 21 derived from raw images 10L, 10R with known classification are presented to the ANN 30 and the free parameters (e.g. weights associated to connections between neurons) of the ANN 30 are modified such that the output of the ANN 30 resembles, according to a pre-defined metric, the known classification.

Such classification could be denoted as "medical anomaly is present in the raw images 10L, 10R of the bilaterally-symmetric organs" versus "no medical anomaly is present in the raw images 10L, 10R of the bilaterally-symmetric organs". The ANN 30 can be organised as a multi-layered network with two output neurons 30.1, 30.2. The first output neuron 30.1 is assigned to the classification "medical anomaly is present in the raw images 10L, 10R of the bilaterally-symmetric organs", whereas the second output neuron 30.2 is assigned to the classification "no medical anomaly is present in the raw images 10L, 10R of the bilaterally-symmetric organs" (one-hot binary output).

The ANN 30 is trained such that for feature tensor structures 21 derived from raw images 10L, 10R that show no medical anomaly, the second output neuron 30.2 is fired, whereas for feature tensor structures 21 derived from raw images 10L, 10R that represent a medical anomaly, the first output neuron 30.1 is fired (i.e. activated).

However, output neurons 30.1, 30.2 can also individually be assigned to various specific anomalies, such as "presence of lesions" or "presence of microcalcifications".

Various methods for configuring and training an ANN 30 are known from the state of the art. In particularity, the ANN 30 can be configured as Convolutional Neural Network (CNN) and be trained by a deep learning algorithm.

**Figure 7** schematically illustrates the sixth step S6 in which a longitudinal analysis along a time axis t is performed. Raw images 10L, 10R are taken at subsequent time points t₋₅, t₋₄, ... t₀ from the same patient. For each pair of raw images 10L, 10R taken of corresponding (bilaterally-symmetrical) organs at a certain point in time, the first through the fifth step S1 to S5 is performed individually (i.e. independent of the images acquired at a different point in time), as was explained previously with figures 2 to 6. Thereby, for each of the time points t₋₅, t₋₄, ... t₀ an activation pattern of the output neurons 30.1, 30.2 of the ANN 30 is determined.

In the sixth step S6, the activation patterns (i.e. output values of all output neurons 30.1, 30.2) for all time points t₋₅, t₋₄, ... t₀ are aggregated and fed to an aggregation artificial neural network (ANN) 31.

Furthermore, exam-independent patient data 100 is provided to the aggregation ANN 31. The exam-independent patient data 100 may comprise, for example, the age, the weight, the ethnicity or prior medical conditions of the patient (woman) from which the raw images 10L, 10R were acquired along the time points t₋₅, t₋₄, ... t₀.

The aggregation ANN 31 is trained in a similar way, e.g. by supervised training, as was explained for the ANN 30. As an example, the aggregation ANN 31 is trained such that its output neurons 31.1, 31.2 provide a confidence value that determines a percentage of affirmation of how likely said patient will develop lesions in the future if the raw images 10L, 10R acquired presently (at the time point t₀) and in the past (at the time points t₋₅, t₋₄, ... t₋₁) were free of lesions.

Alternatively or additionally, the aggregation ANN 31 is trained such that its output neurons 31.1, 31.2 provide a confidence value that determines a percentage of affirmation of how likely previously (i.e. presently or in the past) detected lesions will grow in the future.

The pairwise arrangement of left feature images 12L to 15L with corresponding flipped right feature images 12R' to 15R' in a feature image stack 20 and, further on, the transformation of such feature image stack 20 into a feature tensor structure 21 enables the ANN 30 to quickly and precisely allocate features and patterns that pertain to a certain medical anomaly that is to be identified in the respective raw images 10L, 10R, from which the features were derived.

The longitudinal accumulation of raw images 10L, 10R acquired from the same patient at various points in time overcomes the limitation of relying on the findings of just one current scan. This allows for a more precise and accurate detection of an anomaly by the aggregation ANN 31, compared with the ANN 30 that operates on a data acquired at a single point in time. This concept also introduces a temporal dependency in the information extracted by the aggregation ANN 31 which allows for a prediction of the likely evolution of the condition of the patient in the future based on the extracted trajectory of acquired raw images 10L, 10R along the time t.

This is further improved by the feeding of additional patient data 100 that correlates with medical anomalies. Said additional patient data 100 puts the findings of the ANN 30 into context. The aggregation ANN 31 is thus enabled to determine that a certain set of features provides a high risk and has a certain significance for a certain class of patients, while it has no or less significance of a different class of patients. The contextual differentiation could, for example, be based on age, where certain anomalies are expected to appear after a certain age. If such anomalies appear at a younger age, they can be assigned a different significance. But also further patient data 100 beyond age play a role in putting the image processing and analysis findings, as condensed in the activation patterns of the ANN 30, into perspective.

### List of References

- 10L, 10R: left, right raw image; raw image
- 11L, 11R: left, right digital image; digital image
- 12L, 12R: first left, first right feature image; feature image
- 12R' to 15R': flipped feature image
- 13L, 13R: second left, second right feature image; feature image
- 14L, 14R: third left, third right feature image; feature image
- 15L, 15R: fourth left, fourth right feature image; feature image
- 12P to 15P: first to fourth feature image pair
- 20: feature image stack
- 21: feature tensor structure
- 30: artificial neural network, ANN
- 30.1: first output neuron
- 30.2: second output neuron
- 31: aggregation artificial neural network (ANN)
- 31.1, 31.2: output neuron
- 100: patient data
- D1: first decision step
- H: horizontal direction
- S1 to S6: first to sixth step
- t: time axis
- t₋₅, t₋₄, ... t₀: time point
- V: vertical direction

## Claims

1. Method for detecting at least one medical anomaly, **characterised in that**
- a first raw image (10L) is acquired from a first organ of a human or animal body,
- a second raw image (10R) is acquired from a second organ of the same human or animal body substantially simultaneously to the first raw image (10L), wherein the first and second organ are bilaterally-symmetric relative to each other,
- for at least one feature characterising a medical anomaly, a feature image (12L to 15L, 12R to 15R) comprising the feature is derived from each of the raw images (10L, 10R),
- for each feature, the feature image (12L to 15L) derived from the first raw image (10L) and the corresponding feature image (12R to 15R) derived from the second raw image (10R) are aligned according to the symmetry of the bilaterally-symmetrical first and second organ and paired into a feature image pair (12P to 15P) and
- at least one feature image pair (12P to 15P) is presented to an artificial neural network (ANN) (30) being trained to detect and/or classify a medical anomaly from the at least one feature image pair (12P to 15P).

2. Method according to claim 1, **characterised in that** a plurality of feature image pairs (12P to 15P) is stacked into a feature image stack (20) and/or transformed into a feature tensor structure (21) designed for feeding into the ANN (30).

3. Method according to claim 1 or 2, **characterised in that**
- for each feature, a plurality of feature image pairs (12P to 15P) is derived for subsequent time points (t₋₅, t₋₄, ... t₀),
- for each of the time points (t₋₅, t₋₄, ... t₀), at least one feature image pair (12P to 15P) is presented to the ANN (30) generating at least one output value associated with each of the time points (t₋₅, t₋₄, ... t₀),
- wherein the output values of the ANN (30) associated with the time points (t₋₅, t₋₄, ... t₀) are presented to an aggregation artificial neural network (ANN) (31) being trained to detect and/or classify a medical anomaly from a plurality of output values of the ANN (30).

4. Method according to claim 3, **characterised in that** non-exam patient data (100) correlated to at least one medical anomaly is presented to the aggregation ANN (31), wherein the non-exam patient data (100) refers to a patient from which the raw images (10L, 10R) were taken.

5. Method according to claim 4, **characterised in that** the patient data (100) comprises age and/or weight and/or ethnicity and/or prior medical conditions of the patient.

6. Method according to one of the previous claims, **characterised in that** the ANN (30) or the aggregation ANN (31) is formed as a convolutional neural network (CNN) and trained by a deep learning training method.

7. Method according to one of the previous claims, **characterised in that** the first raw image (10L) is taken from the left mamma and the second raw image (10R) is taken from the right mamma of a patient.

8. Method for training an artificial neural network (ANN) (30) to detect at least one medical anomaly, **characterised in that** for a plurality of first and second raw images (10L, 10R),
- a first raw image (10L) is acquired from a first organ of a human or animal body,
- a second raw image (10R) is acquired from a second organ of the same human or animal body substantially simultaneously to the first raw image (10L), wherein the first and second organ are bilaterally-symmetric relative to each other,
- for at least one feature characterising a medical anomaly, a feature image (12L to 15L, 12R to 15R) comprising the feature is derived from each of the raw images (10L, 10R) and
- for each feature, the feature image (12L to 15L) derived from the first raw image (10L) and the corresponding feature image (12R to 15R) derived from the second raw image (10R) are aligned according to the symmetry of the bilaterally-symmetrical first and second organ and paired into a feature image pair (12P to 15P),
wherein an artificial neural network (ANN) (30) is trained to detect and/or classify a medical anomaly by presenting the plurality of feature image pairs (12P to 15P).

9. Method according to claim 8, **characterised in that**
- for each feature, a plurality of feature image pairs (12P to 15P) is derived for subsequent time points (t₋₅, t₋₄, ... t₀),
- for each of the time points (t₋₅, t₋₄, ... t₀), at least one feature image pair (12P to 15P) is presented to the ANN (30) generating at least one output value associated with each of the time points (t₋₅, t₋₄, ... t₀),
- wherein an aggregation artificial neural network (ANN) (31) is trained to detect and/or classify a medical anomaly from
∘ a plurality of output values of the ANN (30) and
∘ from non-exam patient data (100) correlated to at least one medical anomaly and referring to a patient from which the raw images (10L, 10R) were taken.

10. Machine-learning classifier comprising an ANN (30) trained by a method according to claim 8.

11. Machine-learning classifier according to claim 10, further comprising an aggregation ANN (31) trained by a method according to claim 9.
